# EUROPEAN PATENT SPECIFICATION

(11) **EP 0 278 768 B1**
(45) Date of publication and mention of the grant of the patent: **08.09.1993**
(21) Application number: 88301155.3
(22) Date of filing: 11.02.1988
(51) Int. Cl.: B29C 65/34, F16L 47/02

(54) **Electric fusion welding of thermoplastic materials**
Elektro-Schmelzschweissen von thermoplastischen Materialien
Liaison par fusion de matières thermoplastiques par électro soudage

(30) Priority: 11.02.1987 CA 529474
(43) Date of publication of application: 17.08.1988
(73) Proprietor: E. O. Butts Consultants Ltd., Nepean Ontario K2E 6T6 (CA)
(72) Inventor: Butts, Ernest O., Ottawa Ontario K2B 8E1 (CA); Butts, Nicholas Ernest, Huntsville Ontario POA 1KO (CA); Pinder, Robert, Ottawa Ontario K2B 5S1 (CA)
(74) Representative: Howden, Christopher Andrew

(56) References cited:
- CH-A- 658 888
- DE-A- 1 440 958
- DE-A- 2 653 760
- FR-A- 1 072 800
- FR-A- 1 166 776
- FR-A- 1 551 911
- FR-A- 2 562 613
- JP-A-57 043 821
- LU-A- 60 595
- US-A- 2 974 566
- US-A- 2 983 306

## Description

The present invention relates to a method of forming a weld between members of thermoplastic materials. Such materials include polyethylene and polyvinyl chloride, polytetrafluoroethylene and the like, and specifically include high density polyethylene.

Numerous techniques have been developed for the joining of thermoplastic materials including the use of adhesive and welding. Certain of these materials, however, are not adapted to the use of adhesives, such as polyethylene and polyvinyl chloride. Such material has in the past been welded by a technique known as extrusion welding using a tool which applies heat to overlapped sheets of the thermoplastic material, and extrudes a bead of the same thermoplastic material at the edge of the lap, which is intended to fuse with the preheated sheets of the thermoplastic to be joined to form a liquid fusion of the two sheets and the extrudate, thus welding the overlapped sheets. This technique has not proven entirely satisfactory in practice because of a lack of uniformity in the welding process especially where hand held extrusion welding tools are used on large sheets of material.

Another technique known in the prior art involves the use of a so-called "speed-tip" for welding thin sheets of material in which a welding rod of the thermoplastic material is fed through the nozzle of a hot air gun and a stream of hot air together with the melted thermoplastic are applied to the area to be welded. Once again problems of uniformity and completeness of weld are evident. Frequently such welds include pinholes or unwelded portions and can also include portions in which excess heat has been applied and the thermoplastic material damaged. Obviously, damaged and incomplete welds are most undesirable.

The present invention is directed to an electrically heated technique for forming either lap or butt welds between two members of a thermoplastic material. Such techniques have been attempted in the past as disclosed in the teachings of the following U.S. patents.
2,243,506 granted May 27, 1941, B.V. Mitchell
2,647,072 granted July 28, 1953, W.K. Smith
2,742,390 granted April 17, 1956, Beck
2,974,566 granted March 14, 1961, A.B.Hurley
3,049,465 granted August 14,1962, P.E.Wilkins
3,061,503 granted Oct 30,1962, G.E.Gould et al
3,348,640 granted Oct 24,1967, R.R.Thompson et al
4,416,713 granted November 22, 1983, Brooks
In each of the above patents a technique for joining or vulcanizing thermoplastic or rubber is disclosed in which an electrical heating element is provided either to soften an adhesive as in Brooks, or to cure a thermosetting adhesive bonding agent as in Thompson, or to preheat plastic members which are then pressed into intimate contact as taught by Gould, Wilkins, Hurley, Beck and Smith. Mitchell teaches the vulcanising of a patched rubber boot using an electrical heater to achieve the vulcanisation temperature.

In none of the known prior art is there taught an electric fusion welding technique in which an electrical element is provided surrounding a core of the thermoplastic material forming the two members which are to be joined. In contrast, the present invention provides a method of welding adjacent members of a thermoplastic material according to claim 1. This welding technique has been successfully used with materials traditionally considered impossible to weld, such as high density linear polyethylene, polyvinyl chloride, a thermoplastic material sold under the trade mark DELRIN, a thermoplastic material sold under the trade mark NYLON, and the like. Preferred forms of electric resistive element include windings of nichrome or stainless steel wire, although it is within the concept of the present invention to utilise other forms of resistive elements such as coatings of suitable resistivity in place of the helical coil of wire, provided such coating is compatible with the thermoplastic material.

Embodiments of the invention are described below by way of example with reference to the accompanying drawings in which:-
FIGURE 1 is a perspective view of a welding rod in accordance with the present invention;
FIGURE 2 is a view in cross-section through the welding rod of Figure 1;
FIGURE 3 is a view in cross-section through a variant welding rod having a rectangular core;
FIGURE 4 illustrates a lap joint between two sheets of thermoplastic using the welding rod of Figure 1;
FIGURE 5 illustrates the completed weld of the materials being joined in Figure 4;
FIGURE 6 is an enlargement of the weld area of Figure 5;
FIGURE 7 illustrates the electrical connections for making a weld;
FIGURE 8 illustrates a butt weld between curved members such as for example a longitudinal butt weld on a pipe;
FIGURE 9 illustrates the weld of Figure 8 on completion,
FIGURE 10 is a perspective view illustrating the use of the invention in performing a transverse butt weld on piping;
FIGURE 11 is a perspective view of a lap weld in accordance with the present invention; and
FIGURE 12 illustrates a continuous weld lap welding technique utilising the welding rod of the present invention.

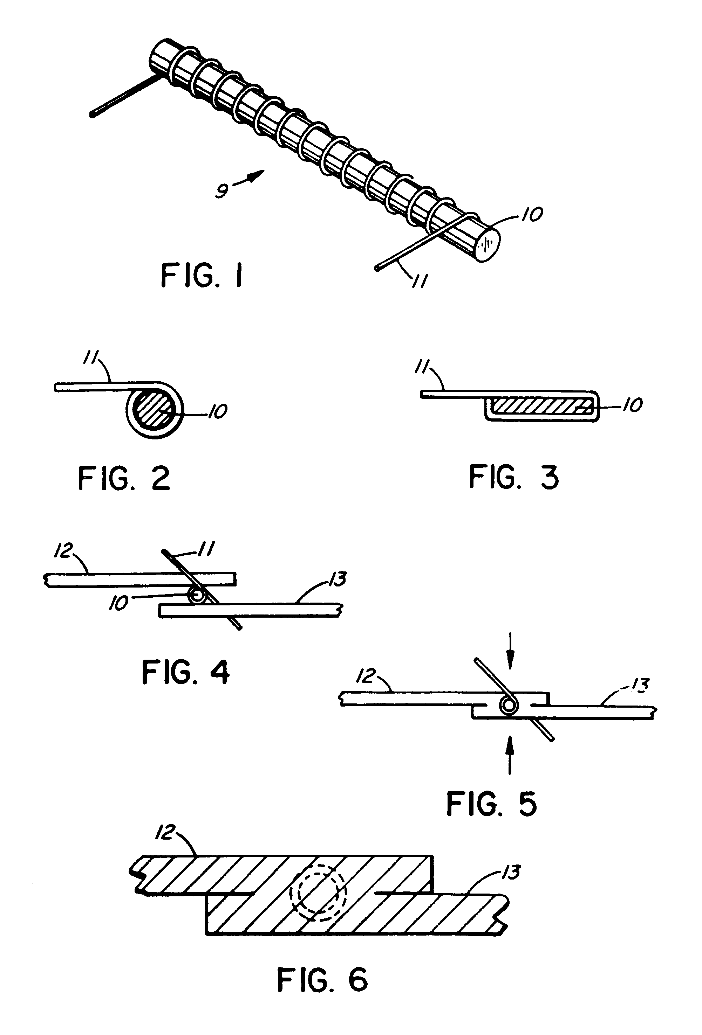

Referring to Figure 1 of the drawings there is shown in perspective a welding rod 9 in accordance with the present invention. A rod 10 of thermoplastic material is wrapped with a helical winding of nichrome or stainless steel wire 11. The size of wire to be used in relation to the size of the core and the spacing of the turns of the helics depends upon the thickness of the material to be welded and the required current to bring about the appropriate heating of the weld area.

In figure 2 a cross-section of the rod 9 of Figure 1 is shown in which the core 10 with its winding 11 are clearly illustrated. Figure 3 illustrates an alternative form of core 10 of rectangular cross-section with a similar winding 11 wrapped in helical fashion about the rectangular core.

It is also within the scope of the present invention to simultaneously wind a plurality of wires around the core which wires may for example be connected together in parallel to reduce the total resistance of the winding, for electrical reasons.

Figure 4 illustrates the procedure to be followed in assembling the components for a weld. A pair of sheets of thermoplastic material 12 and 13 are positioned on either side of a welding rod having a core 10 and a winding 11. An electrical current is passed through the winding 11 and simultaneously pressure is applied above and below on the sheets 12 and 13, resulting in the melting and fusion of the core and the adjacent portions of the sheets 12 and 13 to form a unified weld. The electrical resistance member remains in the weld and reinforces or "stitches" the weld mechanically.

In Figure 6 there is an expanded cross-section through the weld formed by the process illustrated in Figures 4 and 5. As can be seen from this cross-sectional view, the material of the rod 10 is now indistinguishable from the welded material of the sheets 12 and 13, and the weld in reinforced by the electrical resistance member embedded therein.

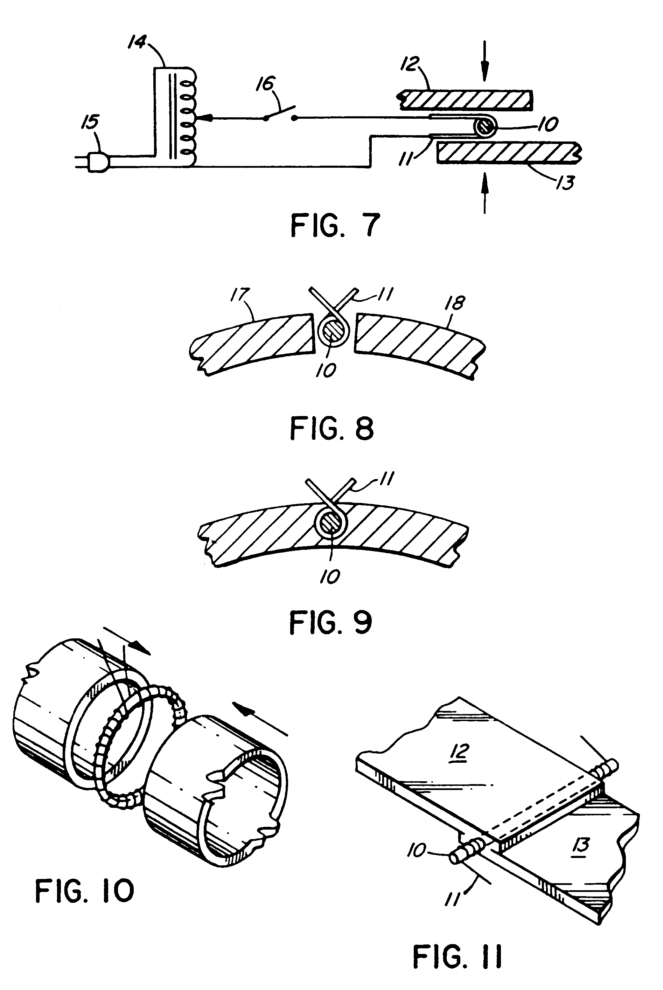

Figure 7 illustrates the electrical circuit required to perform the welding operation. In its simplest form a source of electrical power here represented as a variable voltage transformer 14 is connected to a source of power at 15 and is connected via a suitable switch 16 to the winding 11. Current from the variable voltage transformer is passed through the winding 11 for a predetermined period of time causing the coil 10 of the rod in the adjacent portions of the thermoplastic members 12 and 13 to be heated and fused together by the application of pressure at the same time that electric current is applied to the coil 10.

Figure 8 illustrates a butt weld between curved members for example segments of a longitudinally slit thick walled thermoplastic pipe. As before a welding rod consisting of a core 10 and a winding 11 is positioned between the thermoplastic members 17 and 18. Electric current is applied and pressure is subsequently applied to urge the edges of the members 17 and 18 into contact. The weld is completed when the welding rod is fused and embedded in the weld. The structure of the weld is such that the welding rod becomes part of the body of material of the two thermoplastic members that are joined and the weld is simultaneously reinforced by the presence of the winding 11. This latter completed configuration of the butt weld is illustrated in Figure 9.

Figure 10 is a perspective view illustrating the manner in which a butt weld end to end of circular members such as thermoplastic piping can be achieved utilizing a ring shaped welding rod with a heldical winding wound thereon. The ring shaped welding rod is positioned between the members to be butt welded, the members are brought into proximity, electric current is applied to the helical winding on the ring, and the cylindrical members are pressed together to complete the weld.

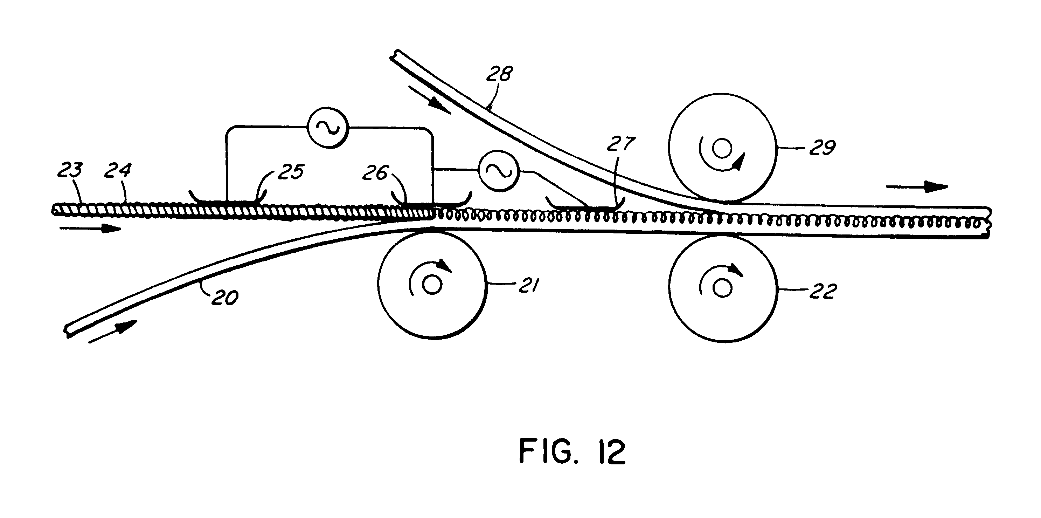

Figure 11 illustrates in perspective a lap weld of the present invention in which may be seen in the welding rod 10, and winding 11, the thermoplastic members 12 and 13 overlapped and welded.

Such welds may be made continuously as is illustrated in Figure 12. In Figure 12 a bottom sheet 20 is fed by suitable means including rolls 21 and 22 into a welding region. Simultaneously a welding rod 23 with a helical winding 24 thereon is supplied to the continuous welding process. The welding rod is heated by the application of an electric current between shoes 25 and 26, which shoes are intended to contact several turns of the helix 24 causing heating of the welding rod 23 which is then partially embedded in the surface of the sheet 20. Pressure is applied between the shoe 26 and the roll 21. The welding rod is thus embedded in the surface of the sheet 20 with its upper edge exposed. Further heating of the coil 24 occurs between the shoe 26 and the shoe 27 due to a further electrical current passed through the coil 24. The heated strip 23 is then contacted by the upper sheet 28 and the weld between the sheets 20 and 28 is completed by passing between rolls 29 and 22.

Clearly various modifications of the processes of the present invention are possible, and all such modifications are intended to be included within the scope of the appended claims. For example it is within the scope of the present invention that the welding rod with resistive wire could further be coated with an additional layer of thermoplastic material where a second layer of thermoplastic material in the weld would be desirable.

The features disclosed in the foregoing description, in the following claims and/or in the accompanying drawings may, both separately and in any combination thereof, be material for realising the invention in diverse forms thereof.

## Claims

1. A method of electrical fusion welding of adjacent first and second members of a thermoplastic material comprising the steps of forming a welding rod having a solid core of said thermoplastic, and an electrical resistance element of open structure on the surface of said solid core, positioning said welding rod adjacent said first member of said thermoplastic, applying a first electrical current to said electrical resistance element of an intensity and for a time to cause said solid core to soften, pressing said welding rod against said first member to fuse said welding rod and said first member and to embed said electrical resistance element at least partially in said first member, after a period of time applying a second electrical current to said electrical resistance element of an intensity and for a time to cause said solid core to soften, positioning said second member adjacent said welding rod and said first member, pressing said second member against said welding rod and said first member to fuse said welding rod and said first and second members and embed said electrical resistance element in said second member until said solid core and said first and second members are solidified.

2. A method of electrical fusion welding as claimed in claim 1, wherein said steps of applying a first electrical current and pressing said welding rod against said first member are carried out simultaneously.

3. A method of electrical fusion welding as claimed in claim 1, wherein said steps of applying a second electrical current and pressing said second member against said welding rod and said first member are carried out simultaneously.

4. A method of electrical fusion welding as claimed in claim 1, wherein said welding rod is coated with a layer of said thermoplastic material.

5. A method of electrical fusion welding as claimed in claim 1, wherein said electrical resistance element is formed of nichrome or stainless steel.

6. A method of electrical fusion welding as claimed in claim 1, wherein said adjacent members are tubular or planar members.

7. A method of electrical fusion welding as claimed in claim 1, wherein said adjacent members are arranged to form a butt or lap joint.

8. A method of electrical fusion welding as claimed in claim 1, wherein said thermoplastic material is selected from the group consisting of polyethylene, polyvinyl chloride, polytetrafluoroethylene, linear high density polyethylene, nylon and DELRIN.

## Patentansprüche

1. Verfahren zum elektrischen Schmelzschweißen aneinanderliegender erster und zweiter Teile aus einem thermoplastischen Material, welches die Schritte umfaßt, einen Schweißstab herzustellen, der einen festen Kern aus besagtem thermoplastischen Material hat, und ein elektrisches Widerstandselement offener Struktur auf der Oberfläche des besagten festen Kerns, Positionieren des besagten Schweißstabs unmittelbar neben dem besagten ersten Teil aus besagtem thermoplastischen Material, Durchleiten eines ersten elektrischen Stroms durch das besagte elektrische Widerstandselement mit einer Stärke und während einer Zeit, um den besagten festen Kern zu erweichen, Drücken des besagten Schweißstabs gegen das besagte erste Teil, um den besagten Schweißstab und das besagte erste Teil zu verschweißen und um das besagte elektrische Widerstandselement wenigstens teilweise in das besagte erste Teil einzubetten, nach einer Zeitspanne Durchleiten eines zweiten elektrischen Stromes durch das besagte elektrische Widerstandselement mit einer Stärke und während einer Zeit, um den besagten festen Kern zu erweichen, Positionieren des besagten zweiten Teils unmittelbar neben dem besagten Schweißstab und dem besagten ersten Teil, Drücken des besagten ersten Teils gegen den besagten Schweißstab und das besagte erste Teil, um den besagten Schweißstab und die besagten ersten und zweiten Teile zu verschweißen und das besagte elektrische Widerstandselement in das besagte zweite Teil einzubetten, bis der besagte feste Kern und die besagten ersten und zweiten Teile verfestigt sind.

2. Verfahren nach Anspruch 1, dadurch gekennzeichnet, daß die besagten Schritte des Durchleitens eines ersten elektrischen Stroms und des Drückens des besagten Schweißstabs gegen das besagte erste Teil gleichzeitig ausgeführt werden.

3. Verfahren nach Anspruch 1, dadurch gekennzeichnet, daß die besagten Schritte des Durchleitens eines zweiten elektrischen Stroms und des Drückens des besagten zweiten Teils gegen den besagten Schweißstab und das besagte erste Teil gleichzeitig ausgeführt werden.

4. Verfahren nach Anspruch 1, dadurch gekennzeichnet, daß der besagte Schweißstab mit einer Schicht des besagten thermoplastischem Materials beschichtet ist.

5. Verfahren nach Anspruch 1, dadurch gekennzeichnet, daß das besagte elektrische Widerstandselement aus Chromnickel- oder rostfreiem Stahl hergestellt ist.

6. Verfahren nach Anspruch 1, dadurch gekennzeichnet, daß die besagten, aneinanderliegenden Teile rohrförmige oder ebene Teile sind.

7. Verfahren nach Anspruch 1, dadurch gekennzeichnet, daß die besagten aneinanderliegenden Teile zur Bildung einer Stumpf- oder Überlappverbindung angeordnet sind.

8. Verfahren nach Anspruch 1, dadurch gekennzeichnet, daß das besagte thermoplastische Material eines aus der Gruppe ist, die aus Polyäthylen, Polyvinylchlorid, Polytetrafluoräthylen, linearem Polyäthylen hoher Dichte, Nylon und DELRIN besteht.

## Revendications

1. Procédé de soudage par électro-fusion d'un premier et d'un second éléments contigus en matière thermoplastique, comprenant les étapes consistant à former une baguette de soudure ayant une partie centrale pleine en matière thermoplastique précitée, et un élément à résistance électrique à structure ouverte sur la surface de ladite partie centrale pleine, à placer ladite baguette de soudure au voisinage immédiat dudit premier élément en matière thermoplastique précitée, à appliquer pendant un laps de temps suffisant audit élément à résistance électrique un premier courant électrique d'une intensité telle qu'il provoque un ramollissement de ladite partie centrale, à appuyer ladite baguette de soudure contre ledit premier élément pour amalgamer ladite baguette de soudure et ledit premier élément et pour noyer ledit élément à résistance électrique au moins partiellement dans ledit premier élément, à appliquer après un certain laps de temps audit élément à résistance électrique un second courant électrique d'une intensité et pendant une durée suffisantes pour provoquer un ramollissement de ladite partie centrale pleine, à placer ledit second élément au voisinage immédiat de ladite baguette de soudure et dudit premier élément, à appuyer ledit second élément contre ladite baguette de soudure et ledit premier élément afin d'amalgamer ladite baguette de soudure et lesdits premier et second éléments et de noyer ledit élément à résistance électrique dans ledit second élément jusqu'à la solidification de ladite partie centrale pleine et desdits premier et second éléments.

2. Procédé de soudage par électro-fusion selon la revendication 1, dans lequel lesdites étapes consistant à appliquer un premier courant électrique et à appuyer ladite baguette de soudure contre ledite premier élément sont effectuées simultanément.

3. Procédé de soudage par électro-fusion selon la revendication 1, dans lequel lesdites étapes consistant à appliquer un second courant électrique et à appuyer ledit second élément contre ladite baguette de soudage et ledit premier élément sont effectuées simultanément.

4. Procédé de soudage par électro-fusion selon la revendication 1, dans lequel ladite baguette de soudure est revêtue d'une couche de ladite matière thermoplastique.

5. Procédé de soudage par électro-fusion selon la revendication 1, dans lequel ledit élément à résistance électrique est en Nichrome ou en acier inoxydable.

6. Procédé de soudage par électro-fusion selon la revendication 1, dans lequel lesdits éléments contigus sont des éléments tubulaires ou plans.

7. Procédé de soudage par électro-fusion selon la revendication 1, dans lequel lesdits éléments contigus sont disposés pour former un assemblage bout à bout ou à recouvrement.

8. Procédé de soudage par électro-fusion selon la revendication 1, dans lequel ladite matière thermoplastique est choisie dans le groupe comprenant le polyéthylène, le chlorure de polyvinyle, le polytétrafluoréthylène, le polyéthylène linéaire haute densité, le Nylon et le DELRIN.
